## Europäisches Patentamt
## European Patent Office
## Office européen des brevets

(19)

(11) Veröffentlichungsnummer: **0 037 484**
**B1**

(12)

# EUROPÄISCHE PATENTSCHRIFT

(45) Veröffentlichungstag der Patentschrift
**06.06.84**

(51) Int. Cl.³: **G 01 N 21/78**, A 61 B 5/00,
G 01 J 3/46

(21) Anmeldenummer: 81101961.1

(22) Anmeldetag: 17.03.81

(54) Vorrichtung zum Positionieren und Festhalten eines Teststreifens für optisch-medizinische Messungen.

(30) Priorität: 22.03.80 DE 3011223
26.04.80 DE 3016198

(43) Veröffentlichungstag der Anmeldung:
14.10.81 Patentblatt 81/41

(45) Bekanntmachung des Hinweises auf die Patenterteilung:
06.06.84 Patentblatt 84/23

(84) Benannte Vertragsstaaten:
AT BE CH DE FR GB IT LI LU NL SE

(56) Entgegenhaltungen:
DE - B - 1 920 404
DE - B - 2 636 420
DE - U - 7 042 397
DE - U - 7 042 398

(73) Patentinhaber: BOEHRINGER MANNHEIM GMBH,
Patentabteilung, Abt. E Sandhofer
Strasse 112-132 Postfach 31 01 20,
D-6800 Mannheim 31 Waldhof (DE)

(72) Erfinder: Nenninger, Klaus, Lilienstrasse 36,
D-6800 Mannheim 71 (DE)
Erfinder: van Rijckevorsel, Rainer, Dipl.-Ing., Freiburger
Strasse 3, D-6831 Brühl (DE)

BUNDESDRUCKEREI BERLIN

**Beschreibung**

Die Erfindung betrifft eine Vorrichtung zum Positionieren und Festhalten eines Teststreifens für optisch medizinische Messungen, mit einem Gehäuse mit einer Aufnahmeöffnung, die an ihrem inneren Ende einen Anschlag für den Teststreifen aufweist und einem Fenster, welches gegenüber dem Testfeld eines in die Aufnahmeöffnung eingeführten und am Anschlag anliegenden Teststreifens angeordnet ist, mit einer im wesentlichen senkrecht auf die Rückseite des Teststreifens wirkenden Andruckeinrichtung.

Die genaue Positionierung eines medizinischen Teststreifens in dem entsprechenden Auswertegerät, üblicherweise einem Remissionsphotometer, ist von entscheidender Bedeutung für die Genauigkeit der Auswertung des Teststreifens. Zum einen ist es selbstverständlich wichtig, daß der Teststreifen in Längsrichtung korrekt unter dem Fenster der Meßoptik liegt, damit nur das entsprechende Testfeld und nicht etwa ein Teil des Trägermaterials im Meßbereich liegt und das Meßergebnis verfälscht. Zum zweiten ist es außerordentlich wichtig, daß der Abstand zwischen der Meßoptik und der Testfeldoberfläche sehr genau reproduzierbar eingehalten wird. Die gemessene Intensität geht nämlich je nach Konstruktion der Optik mit der zweiten bis vierten Potenz des Abstandes zwischen dem Meßfeld und dem Photoempfänger in das Ergebnis ein. Bei einem typischen Abstand von 8 mm ergibt eine Schwankung des Abstandes von nur 0,1 mm einen Fehler, der zwischen 2,5 und 5% liegt. Besondere Schwierigkeiten ergeben sich aus der Tatsache, daß nach Möglichkeit Teststreifen von verschiedenen Herstellern und für verschiedene medizinische Parameter mit einem Gerät gemessen werden sollen. Diese Teststreifen können sich in ihrer Dicke im Bereich des Testfeldes erheblich unterscheiden.

Bei bekannten Geräten werden die Teststreifen in eine dafür vorgesehene Vorrichtung eingeführt und über eine Blattfeder in der Vermessungsposition festgehalten. Die Positionierung ist bei diesen Einrichtungen sowohl in der Längsrichtung des Teststreifens als auch bezüglich des Abstandes zur Meßoptik unbefriedigend. Es kann verhältnismäßig leicht passieren, daß beim Einschieben des Teststreifens dieser nicht vollständig am Anschlag anliegt, weil die Blattfeder schon vorher dem Einschieben einen erheblichen Widerstand entgegensetzt. Andererseits ist es auch leicht möglich, daß der Teststreifen nach dem Einschieben versehentlich wieder ein kleines Stück aus dem Gerät herausgezogen wird, insbesondere wenn die Hände der Bedienungsperson, wie dies im Labor häufig vorkommt, feucht sind und deswegen etwas an dem Teststreifen haften.

Darüber hinaus ist, wie die vorliegende Erfindung erkannt hat, auch die Positionierung senkrecht zur Teststreifenfläche jedenfalls dann unzureichend genau, wenn verschieden dicke Teststreifen gemessen werden sollen. Die Spannung der Blattfeder ist nämlich in erheblichem Maße von der Dicke des Teststreifens abhängig. Entsprechend ändert sich auch der Abstand zwischen Testfeld und Meßoptik in einem bei hohen Anforderungen an die Meßgenauigkeit nicht tolerierbaren Maße.

Häufig ist das Fenster in der Aufnahmeöffnung einfach als offener Rahmen ausgeführt, um beispielsweise die Luftzufuhr zu dem Testfeld nicht zu unterbrechen und Spiegelungen zu vermeiden. In diesen Fällen lassen sich die unbefriedigenden Meßergebnisse leicht dadurch erklären, daß verschiedene Restfelder verschieden weit in diesen Rahmen hineingedrückt werden. Im Rahmen der vorliegenden Erfindung wurde jedoch festgestellt, daß auch bei Geräten mit einem fest positionierten geschlossenen Fenster (z. B. aus Glas) die Meßresultate häufig stark von der Größe der Kraft abhängen, mit der das Testfeld an das Fenster gepreßt wird.

Aufgabe der vorliegenden Erfindung ist es daher, die Positionierung von Teststreifen für optisch medizinische Messungen so zu verbessern, daß ein sehr genaues Meßergebnis erreicht wird.

Diese Aufgabe wird bei einer Vorrichtung der eingangs genannten Art dadurch gelöst, daß die Andruckeinrichtung sich beim Einführen des Teststreifens in einer vom Teststreifen entfernten Ruhelage befindet und in eine Andrückposition bewegbar ist, wenn der Teststreifen sich in einer Position befindet, in der er am Anschlag anliegt, wobei die Andruckeinrichtung den Teststreifen gegen das Fenster drückt und ihre Andruckkraft in den verschiedenen Teststreifendicken entsprechenden Positionen näherungsweise gleich ist.

Dadurch, daß die Andruckeinrichtung gemäß der Erfindung sich beim Einführen des Teststreifens in einer von diesem entfernten Ruhelage befindet, läßt sich der Teststreifen sehr leicht in die Aufnahmeöffnung einführen, bis er am Anschlag anliegt. Die Andruckeinrichtung wird durch geeignete Mittel in dem Moment gegen die Rückseite des Teststreifens bewegt, in dem dieser am Anschlag anliegt. Hierzu ist beispielsweise eine im Bereich des Anschlages vorgesehene Photozelleneinrichtung geeignet, die mit einer elektromagnetischen Betätigung der Andruckeinrichtung zusammenwirkt. Erfindungsgemäß ist weiterhin die Andruckeinrichtung so gestaltet, daß ihre Andruckkraft in den verschiedenen Teststreifendicken entsprechenden Positionen näherungsweise gleich ist. Bei der erwähnten Realisierung mit elektromagnetischen Mitteln kann beispielsweise die Spule des die Andruckeinrichtung betätigenden Elektromagneten in einer dem Fachmann bekannten Art und Weise so gestaltet sein, daß die Stärke des magnetischen Feldes in dem den verschiedenen möglichen Teststreifendicken entsprechenden Bewegungsbereich des Spulenkerns näherungsweise konstant ist, so daß auch eine konstante Kraftwirkung resultiert. Die Betätigungseinrichtung, durch die die Bewegung der Andruckeinrichtung aus der Ruhelage in die Andruckposition ausgelöst wird, kann in verschiedenerlei Weise, beispielsweise in Form eines von Hand zu betätigenden Auslöseknopfes ausgeführt sein. Bevorzugt ist eine Betätigungseinrichtung jedoch im Bereich des Anschlages vorgesehen, so daß sie von dem eingeführten Teststreifen bewegt wird, wie beispielsweise die oben erwähnte Lichtschranke, bestehend aus einer Lichtquelle und einer Photozelle im Bereich des Anschlages für den Teststreifen.

Gegenüber der erwähnten elektrisch-magnetischen Ausführungsform der erfindungsgemäßen Einrichtung ist eine mechanische Lösung insoweit vorteilhaft, als sie keine Hilfsenergie benötigt. Bevorzugte Ausführungsformen einer solchen mechanischen Realisierung des erfindungsgemäßen Vorschlages sind Gegenstand weiterer Unteransprüche.

Bevorzugt kommt eine Federeinrichtung zum Einsatz, um die für die Andruckeinrichtung notwendige Kraft zu erzeugen. Sie steht über eine Kraftübertragung in kraftschlüssiger Verbindung mit der Andruckeinrichtung, wobei die Kraftübertragung bevorzugt so gestaltet ist, daß das Übersetzungsverhältnis der Kraftübertragung und die Kraft der Federeinrichtung sich in dem verschiedenen Teststreifendicken entsprechenden Bewegungsbereich näherungsweise reziprok ändern. Als Federeinrichtungen kommen insbesondere mechanische Federn, beispielsweise in Form von Spiral- oder Schraubenfedern, in Betracht. Ebensogut können jedoch auch beispielsweise pneumatische Kolben-Zylinderanordnungen vorteilhaft verwendet werden. Derartige Federeinrichtungen haben regelmäßig eine vom Grad ihrer Dehnung abhängende Kraft. Dies ist, wie oben erwähnt, bei direkter Kraftübertragung auf die Andruckeinrichtung ungünstig, weil die Positionierung des Teststreifens in der Richtung senkrecht zur Teststreifendicke dadurch verschieden ist, wenn verschieden dicke Teststreifen zur Anwendung kommen. Eine erfindungsgemäße Kraftübertragung kann beispielsweise in Form einer Kurvenscheibe gestaltet sein, auf die die Federeinrichtung unter einem bestimmten Winkel über eine Gleitrolle einwirkt. In einem solchen Fall ist der Winkel zwischen der Angriffsrichtung der Federeinrichtung und der wirksamen Fläche der Kurvenscheibe bestimmend für die Kraftübertragung. Es ist daher ohne weiteres möglich, die Kurve der Kurvenscheibe so zu gestalten, daß sich deren Kraftübertragung erfindungsgemäß reziprok zur Änderung der Federkraft ändert.

Gemäß einer weiteren bevorzugten Ausführungsform der Erfindung schließt der Bewegungsbereich der Andruckeinrichtung einen Scheitelpunkt ein, wobei auf der teststreifenseitigen Seite ihres Bewegungsbereiches eine Kraft auf den Teststreifen zu auf die Andruckeinrichtung wirkt, während auf der, bezogen auf den Scheitelpunkt, vom Teststreifen abgewandten Seite des Bewegungsbereiches eine Kraft vom Teststreifen weg auf die Andruckeinrichtung wirkt. Der Scheitelpunkt liegt dabei so, daß die Andruckeinrichtung in der diesem Scheitelpunkt entsprechenden Position noch nicht am dicksten zu messenden Teststreifen anliegt. Mit einer derartigen Konstruktion läßt sich eine besonders zuverlässige und einfache mechanische Betätigung der Andruckeinrichtung realisieren, weil der Bewegungsbereich der Andruckeinrichtung eine stabile Ruhelage aufweist.

In besonders bevorzugter Weise wird die Kraftübertragung zwischen der Federeinrichtung und der Andruckeinrichtung mit Hilfe einer Hebeleinrichtung realisiert, welche um eine Hebelachse schwenkbar ist und zwei gelenkige Verbindungen zur Anlenkung der Federeinrichtung aufweist. Diese Hebeleinrichtung kann vorteilhaft so ausgestaltet werden, daß ein weitgehend gleicher Druck des Kolbens auf den Teststreifen unabhängig von dessen Dicke erreicht wird. Durch die Anordnung der gelenkigen Verbindungen und des Anlenkpunktes der bevorzugt verwendeten Zug- oder Druckfeder an der Hebeleinrichtung, jeweils relativ zur Achse der Hebeleinrichtung und zur Führung der Andruckeinrichtung, werden die Hebelverhältnisse festgelegt, die die Kraftübertragung zwischen der Feder und der Andruckeinrichtung bestimmen. Wie weiter unten im einzelnen dargelegt wird, ändern sich diese Hebelverhältnisse, wenn die Andruckeinrichtung beim Anliegen an Teststreifen verschiedener Dicke verschiedene Positionen einnimmt und demzufolge die entsprechenden Drehstellungen der Hebeleinrichtung ebenfalls verschieden sind. Die je nach Teststreifendicke unterschiedlichen Stellungen der den Teststreifen andrückenden Andruckeinrichtung haben andererseits zwangsläufig verschiedene Auslenkungen der Feder und damit verschiedene Federkräfte zur Folge. Erfindungsgemäß sind nun die Federraten einerseits und die Dimensionierung der erwähnten Bauteile andererseits so ausgelegt, daß sich die erwähnten Hebelverhältnisse und die Kraft der Feder näherungsweise reziprok zueinander ändern, wenn die Hebeleinrichtung bei verschiedenen Teststreifendicken in der Andruckposition verschiedene Drehstellungen einnimmt. Durch diese bevorzugte Konstruktion wird ein von der Teststreifendicke nahezu unabhängiger Anpreßdruck erreicht, wobei gleichzeitig eine raumsparende und kostengünstige Bauweise möglich ist.

Gemäß einer bevorzugten Ausgestaltungsform der Erfindung schließt der Schwenkbereich der Hebeleinrichtung eine Stellung ein, in welcher die Achse des Anlenkpunktes der Feder an der Hebeleinrichtung, die Hebeleinrichtung und die Schwenkachse der Feder auf der von der Hebeleinrichtung abgewandten Seite in einer Ebene liegen. In dieser Stellung ist die Feder maximal gespannt, d. h. es handelt sich um den Scheitelpunkt des Schwenkbereiches. Bei Verschwenken der Hebeleinrichtung in beide Richtungen vom Scheitelpunkt aus entspannt sich die Feder, wobei in der Praxis zum Andrücken des Teststreifens die Hebeleinrichtung durch geeignete Mittel, beispielsweise den Teststreifen selbst, oder durch einen entsprechenden im Gerät untergebrachten Antrieb aus einer auf einer ersten Seite des Scheitelpunktes liegenden Stellung des Schwenkbereiches gegen die Kraft der Feder auf den Scheitelpunkt zubewegt wird. Wenn der Scheitelpunkt überwunden ist, entspannt sich die Feder wieder, so daß die Hebeleinrichtung auf der zweiten Seite des Schwenkbereiches ein Schwenkmo-

3

# 0 037 484

ment vom Scheitelpunkt weg durch die Feder erhält. Bevorzugt besteht auch bei dieser Ausführungsform in der Scheitelpunktstellung auch für sehr dicke Teststreifen noch ein Spielraum zwischen der Andruckeinrichtung und dem Streifen. Dadurch wird erreicht, daß die Schwenkbewegung der Hebeleinrichtung nach Überwindung des Scheitelpunktes durch die Feder getrieben weiter abläuft, bis der erwähnte Spielraum von der Andruckeinrichtung zurückgelegt ist und die Andruckeinrichtung an dem Teststreifen anliegt. Durch diese konstruktive Maßnahme wird wiederum eine weitgehende Gleichheit des Anpreßdruckes auf verschieden dicke Teststreifen und gleichzeitig eine genaue Positionierung der Teststreifen in Längsrichtung erreicht.

Gemäß einer weiteren bevorzugten Ausführungsform ist die Hebeleinrichtung durch den Teststreifen selbst betätigbar. Der Teststreifen wird in der Praxis in die Aufnahmeöffnung eingeführt, bis er an eine entsprechende Anlagefläche der Hebeleinrichtung anstößt. Beim weiteren Einführen des Teststreifens in die Aufnahmeöffnung wird die Hebeleinrichtung bevorzugt gegen die Kraft der Feder auf den Scheitelpunkt zubewegt. Besonders vorteilhaft ist es nun, wenn die Anordnung des Teststreifenanschlages am inneren Ende der Aufnahmeöffnung und die Hebelverhältnisse der Hebeleinrichtung so dimensioniert sind, daß bei Anliegen des Teststreifens an dem Anschlag die Hebeleinrichtung über den Scheitelpunkt des Schwenkbereiches hinaus verschwenkt ist. Diese Maßnahme hat zur Folge, daß die Schwenkbewegung der Hebeleinrichtung durch die Kraft der Feder getrieben selbsttätig weiter abläuft, wenn die Einführung des Teststreifens in die Aufnahmeöffnung beendet ist und der Teststreifen am Anschlag anliegt. Der eingeführte Teststreifen ist in diesem Moment aufgrund des oben erwähnten Spielraumes noch frei, während die Hebeleinrichtung eine rasch ablaufende Schnappbewegung durchläuft. Diese Schnappbewegung endet, wenn die Andruckeinrichtung an dem Teststreifen anliegt. Der Hauptvorteil einer derartigen Konstruktion besteht darin, daß der Teststreifen besonders leicht in das Gerät einführbar ist, kein gesonderter Antrieb für den Andruckmechanismus des Teststreifens notwendig ist und der Teststreifen auch in seiner Längsposition sehr genau festgelegt wird.

Bevorzugt ist die Hebeleinrichtung als Nockenscheibe ausgeführt. Die Andruckeinrichtung kann insbesondere als doppelgelenkig aufgehängte Andruckplatte oder als seitlich geführter Kolben ausgestaltet sein.

Eine weitere vorteilhafte Ausgestaltung der Erfindung dient der Rückstellung der Andruckmechanik aus der Andruckstellung in die Ruhestellung. Gemäß dieser Ausführungsform ist das Gehäuse zum Herausnehmen des Teststreifens in Längsrichtung beweglich. Beim Bewegen des Gehäuses wirkt die Nockenscheibe, bevorzugt über einen zusätzlichen Nocken, mit einem entsprechenden ortsfesten Bauteil des Meßgerätes, beispielsweise eine im Verschiebeweg des erwähnten Nockens befindlichen Klinke, dergestalt zusammen, daß beim Bewegen des Gehäuses entgegen der Einschubrichtung des Teststreifens, üblicherweise also beim Herausziehen des Gehäuses der Positionierungsvorrichtung aus dem Meßgerät, die Nockenscheibe aus der Andruckstellung in die Ruhestellung zurückgeschwenkt wird. Diese Ausführungsform erlaubt ein besonders einfaches Entnehmen des Teststreifens aus dem Meßgerät. Ein besonderer Vorteil ergibt sich bei Kombination mit der erwähnten Betätigung der Nockenscheibe durch den Teststreifen. In diesem Fall wird nämlich der Teststreifen durch die Nockenscheibe über deren Anlagefläche in der Aufnahmeöffnung ein Stück nach außen verschoben, so daß er anschließend besonders leicht entnommen werden kann. Der gleiche Vorteil wird auch erreicht, wenn die Nockenscheibe durch einen geeigneten Antrieb zurückschwenkbar ausgestaltet ist.

Die Erfindung wird im folgenden anhand von in der Zeichnung dargestellten Ausführungsbeispielen näher erläutert. Es zeigt

Fig. 1 eine Vorrichtung in einer schematisierten Seitenansicht mit abgenommenem Deckel,

Fig. 2 eine geometrische Prinzipdarstellung zur Erläuterung der in verschiedenen Stellungen der Nockenscheibe herrschenden Hebel- und Abmessungsverhältnisse,

Fig. 3a bis c eine weitere Ausführungsform der Erfindung in drei verschiedenen Stellungen der Nockenscheibe und der Andruckeinrichtung.

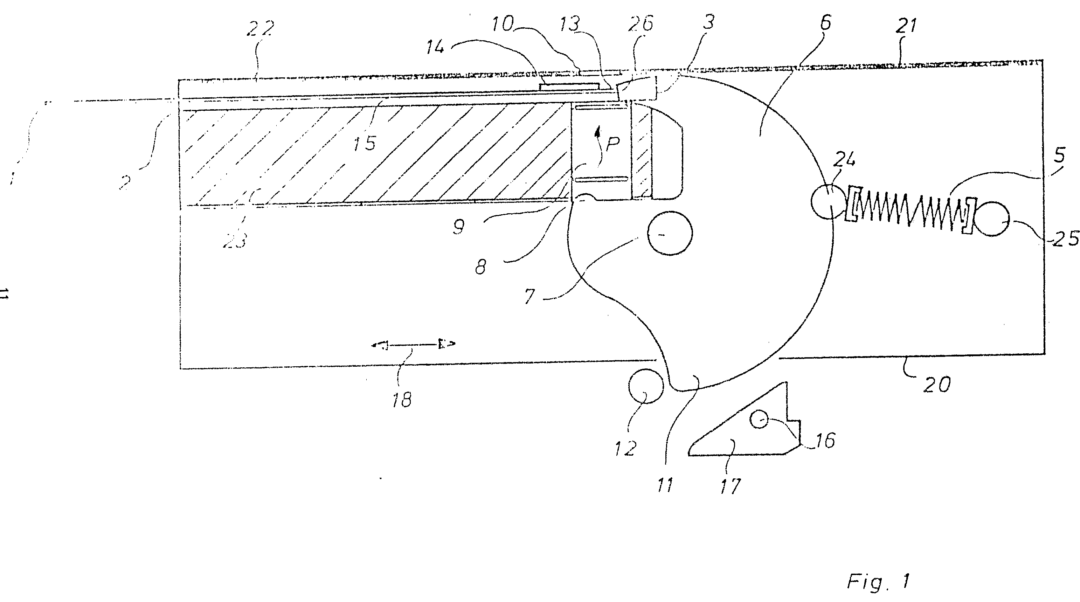

Fig. 1 zeigt eine Vorrichtung, bei der sich der Andruckmechanismus für den Teststreifen in der Ruhestellung befindet. In einem Gehäuse 20 ist nahe der Seite 21, die dem nicht näher gezeigten Photoempfänger zugewandt ist, die Aufnahmeöffnung 2 für den Teststreifen 1 angeordnet. Die Aufnahmeöffnung ist etwa rechteckigen Querschnittes und entspricht in ihrer Form im wesentlichen der Form der einzusetzenden Teststreifen. Nach außen hin ist die Öffnung durch die Wand 22 begrenzt, während zur Innenseite ein Einsatz 23 vorgesehen ist, der gleichzeitig in seinem in der Mitte des Gehäuses 20 liegenden Ende den Andruckkolben 9 aufnimmt. In der Wandung 22 des Gehäuses 20 ist das Fenster 10 vorgesehen, in dessen Bereich das Testfeld 14 des Teststreifens 1 bei voll eingeführtem Teststreifen liegen soll. Für diese Positionierung des Teststreifens 1 ist am inneren Ende 13 der Aufnahmeöffnung 2 der Anschlag 3 vorgesehen, der sich auf beiden Seiten der Nockenscheibe erstreckt, wobei in der Figur nur der hinter der Nockenscheibe liegende Teil gestrichelt dargestellt ist. Bei der üblichen Ausführungsform der Vorrichtung liegt der Anschlag 3 etwa 6 mm von der Mitte des Testfeldes 14. Bei diesem Abstand kommt das Testfeld direkt unter dem Fenster zu liegen.

Die Nockenscheibe 6 ist um die Achse 7 drehbar am Gehäuse befestigt. Sie besitzt den Nocken 8, der unmittelbar am Kolben 9 angreift. Außerdem ist über eine gelenkige Verbindung 24 die Druckfeder 5 an der Nockenscheibe 6 befestigt. Das andere Ende der Druckfeder 5 ist an der Schwenkachse 25 am

4

Gehäuse angelenkt. Die Achse 7 der Nockenscheibe 6 und die Schwenkachse 25 liegen in der gleichen Ebene.

Die Nockenscheibe 6 ist seitlich, also zum Teststreifen 1 hin, mit einer Kontaktfläche 26 versehen, die bei geöffneter Stellung der Vorrichtung, d. h. in der gezeichneten Ruhestellung bis vor das Fenster 10 ragt. Während des Einführvorganges des Teststreifens 1 in die Öffnung 2 kommt das Ende des Teststreifens an der Kontaktfläche 26 zum Anliegen. Bei einem weiteren Einführen des Teststreifens 1 in die Öffnung 2 wird die Nockenscheibe 6 um ihre Achse 7 im Uhrzeigersinn gedreht. Bei dieser Drehbewegung wird die Feder 5 zunächst gespannt, bis die Achse 7, die gelenkige Verbindung 24 und die Schwenkachse 25 in seitlicher Darstellung gemäß der Figur auf einer Geraden liegen. Räumlich betrachtet liegen die drei im wesentlichen parallel zueinander verlaufenden Achsen 7, 24, 25 dann in einer Ebene. Diese Stellung ist der Scheitelpunkt der Schwenkbewegung der Nockenscheibe. Statt der dargestellten Druckfeder kann selbstverständlich auch eine Zugfeder verwendet werden, die dann beispielsweise bei einer im übrigen der dargestellten Ausführungsform entsprechenden Konstruktion ihre Schwenkachse 25 links von der gelenkigen Verbindung 24 in Fig. 1 haben müßte.

Während des zuvor beschriebenen ersten Teils der Drehbewegung der Nockenscheibe hat der Nocken 8 einen möglicherweise zwischen ihm und der Unterseite des Andrückkolbens bestehenden Spielraum durchlaufen und liegt jetzt an der Unterseite des Kolbens an. Der Kolben ist auch bereits etwas nach oben gedrückt worden, jedoch noch nicht in den Bereich der Aufnahmeöffnung eingedrungen. Wenn die Nockenscheibe 6 im Scheitelpunkt steht, steht die Kontaktfläche 26 noch ein wenig gegenüber dem Anschlag 3 nach links in Fig. 1 hervor. Beim weiteren Einführen des Teststreifens kommt dieser am Anschlag 3 zum Anliegen, wodurch seine Längsposition festgelegt ist. In diesem Moment hat die Nockenscheibe 6 den Scheitelpunkt überwunden und führt, getrieben durch die Kraft der Feder 5 eine Schnappbewegung aus, bei der der Teststreifen festgeklemmt wird. Die Höhe des Kolbens 9 und die Hebelverhältnisse der Nockenscheibe sind dabei so eingerichtet, daß der Kolben auch bei sehr dicken Teststreifen 1 nicht sofort an der Rückseite des Teststreifens anliegt. Vielmehr soll die Nockenscheibe 6 vor dem Anliegen am Teststreifen so weit verschwenkt sein, daß die durch die weiter unten näher beschriebene Hebelübersetzung auf den Kolben übertragene Kraft der Feder ausreicht, um den Teststreifen zuverlässig festzuhalten.

Das Gehäuse 20 der Vorrichtung ist bevorzugt in einem in der Figur nicht dargestellten Gleitlager in Längsrichtung gemäß dem Doppelpfeil 18 beweglich gelagert. Das Gehäuse 20 wird zum Messen nach rechts in Fig. 1 bewegt, wobei der Nocken 11 der Nockenscheibe 6 über eine um eine Achse 16 schwenkbare Klinke 17 gleitet, welche dabei im Uhrzeigersinn verschwenkt wird. Danach fällt die Klinke 17 in die in der Figur dargestellte Stellung zurück und ist gegen Verdrehen entgegen dem Uhrzeigersinn gesichert. Zum Auswerfen des Teststreifens 1 wird das ganze Gehäuse in der Zeichnung nach links bewegt, bis der Nocken 11 der Nockenscheibe mit der rechten Kante der Klinke 17 zum Eingriff kommt. Bei weiterer Bewegung des Gehäuses 20 nach links wird dadurch die Nockenscheibe 6 entgegen dem Uhrzeigersinn zurückgeschwenkt, wobei sich der Andrückkolben 9 von der Rückseite 15 des Teststreifens 1 löst und der Teststreifen von der Kontaktfläche 26 in der Aufnahmeöffnung 2 nach links verschoben wird. Der Teststreifen ist danach besonders bequem aus der Meßvorrichtung zu entnehmen.

Der Nocken 11 betätigt beim Schwenken der Nockenscheibe auch einen Schalter 12 zum Ein- und Ausschalten des optischen Meßgerätes.

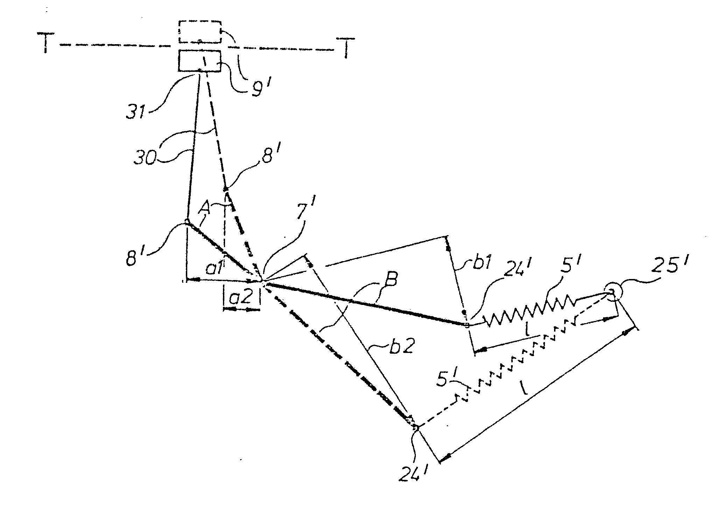

Fig. 2 zeigt in einer geometrischen Schemadarstellung die an der Nockenscheibe wirkenden Hebel in zwei verschiedenen Nockenscheibenstellungen, wobei die erste Stellung durch durchgezogene Linien, die zweite Stellung gestrichelt dargestellt ist. In der ersten Stellung hat die Nockenscheibe bei ihrer Schnappbewegung in die Andrückstellung gerade den Scheitelpunkt überwunden, die zweite Stellung entspricht der Andrückstellung bei einem verhältnismäßig dünnen Teststreifen. Die Zeichnung soll das Prinzip der wirkenden Hebelverhältnisse verdeutlichen und ist nicht maßstäblich zu verstehen.

Die Nockenscheibe stellt verallgemeinert eine Hebeleinrichtung mit den beiden Hebeln A und B dar. Zwischen beiden Hebeln befindet sich die Hebelachse 7'. Dem Betätigungsnocken 8 entspricht der Umlenkpunkt 8', von welchem die Bewegung über die Übertragungsstange 30 und ein Gelenk 31 auf den in diesem Fall als Druckplatte ausgebildeten und in senkrechter Richtung geführten Kolben 9' übertragen wird. Die Linie T-T markiert die Lage der Unterseite des dicksten zu messenden Teststreifens im an das Fenster der Optik angedrückten Zustand.

An der gelenkigen Verbindung 24' ist die Feder 5' angelenkt, deren anderes Ende um die Schwenkachse 25' schwenkbar gelagert ist.

Zur Berechnung der auf die Andruckplatte 9' wirkenden Kraft müssen die wirksamen Hebellängen der Hebel A und B eingesetzt werden. Dies sind die Projektionen dieser Hebel senkrecht auf die wirkenden Kräfte. In der Zeichnung sind diese Hebellängen mit folgenden Bezugszeichen versehen:

b1: wirksamer Krafthebel B in der ersten Stellung
b2: wirksamer Krafthebel B in der zweiten Stellung
a1: wirksamer Krafthebel A in der ersten Stellung
a2: wirksamer Krafthebel A in der zweiten Stellung

5

Die von der Feder ausgehende Kraft F ergibt sich als Produkt des Federwegs s und der Federrate c. Die Feder ist vorgespannt, der Federweg s berechnet sich als Differenz der Länge der Feder im entspannten Zustand Lo und der Federlänge in der jeweiligen Stellung l.

Wie aus Fig. 2 ersichtlich, sind die Hebellängen a und b und die Federlängen l je nach Stellung der Nockenscheibe bzw. der hier schematisch dargestellten Hebeleinrichtung verschieden. Nach Überwinden des Scheitelpunktes nimmt in Uhrzeigerrichtung die Hebellänge b zu, während die Hebellänge a abnimmt. Dadurch wird die Hebelübersetzung der Federkraft auf die Andruckplatte 9' immer größer. Gleichzeitig nimmt die Kraft der Feder wegen deren zunehmender Ausdehnung ab. Der Fachmann kann nun die Abmessungen der erfindungsgemäßen Vorrichtung so dimensionieren, daß sich diese beiden gegenläufigen Effekte nahezu kompensieren und damit über einen gewissen Schwenkbereich die auf die Andruckplatte und damit auf den Teststreifen wirkende Kraft nahezu konstant bleibt. Für eine Feder der entspannten Länge Lo = 18,3 mm und der Federrate 0,1 Newton (N)/mm zeigt Tabelle 1 beispielhaft dieses vorteilhafte Ergebnis.

Tabelle 1

| Teststreifen-dicke (mm) | Feder-länge (mm) | Federweg $s = Lo - 1$ (mm) | Federkraft $F = c \cdot s$ (N) | a (mm) | b (mm) | Druck auf Teststreifen $P = \dfrac{F \cdot b}{a}$ (N) |
|---|---|---|---|---|---|---|
| 0,3 | 12,44 | 5,86 | 0,586 | 5,1 | 11,8 | 1,3558 |
| 0,4 | 12,22 | 6,08 | 0,608 | 5,2 | 11,6 | 1,3563 |
| 0,5 | 11,98 | 6,32 | 0,632 | 5,25 | 11,5 | 1,3843 |
| 0,6 | 11,78 | 6,52 | 0,652 | 5,3 | 11,3 | 1,3901 |
| 0,7 | 11,58 | 6,72 | 0,672 | 5,35 | 11 | 1,3816 |
| 0,8 | 11,3 | 7,00 | 0,700 | 5,4 | 10,7 | 1,387 |
| 0,9 | 11,1 | 7,2 | 0,720 | 5,45 | 10,4 | 1,3739 |
| 1,0 | 10,9 | 7,4 | 0,740 | 5,5 | 10,2 | 1,3723 |
| 1,1 | 10,75 | 7,55 | 0,755 | 5,55 | 9,9 | 1,3467 |

Wie aus der Tabelle zu ersehen ist, beträgt die Federkraft bei einer Teststreifendicke von 0,3 mm 0,586 N, bei einer Teststreifendicke von 1,1 mm 0,755 N. Die Federkraft ist also bei einem sehr dicken Teststreifen nahezu 30% größer als bei einem sehr dünnen Teststreifen. Dagegen ändert sich wegen der reziproken Änderung der Hebelverhältnisse der Druck auf den Teststreifen in weit geringerem Ausmaß. Er erreicht im in Tabelle 1 dargestellten Ausführungsbeispiel bei mittleren Teststreifendicken einen Maximalwert, der sich jedoch nur um weniger als 4% vom geringsten Wert unterscheidet. Während der erstgenannte Kraftunterschied, wie die Erfahrung zeigt, zu einer erheblichen Ungenauigkeit des Meßergebnisses bei der optischen Auswertung des Teststreifens führt, wird durch die bei der Vorrichtung verbleibenden geringen Druckunterschiede das Meßergebnis nur geringfügig verfälscht.

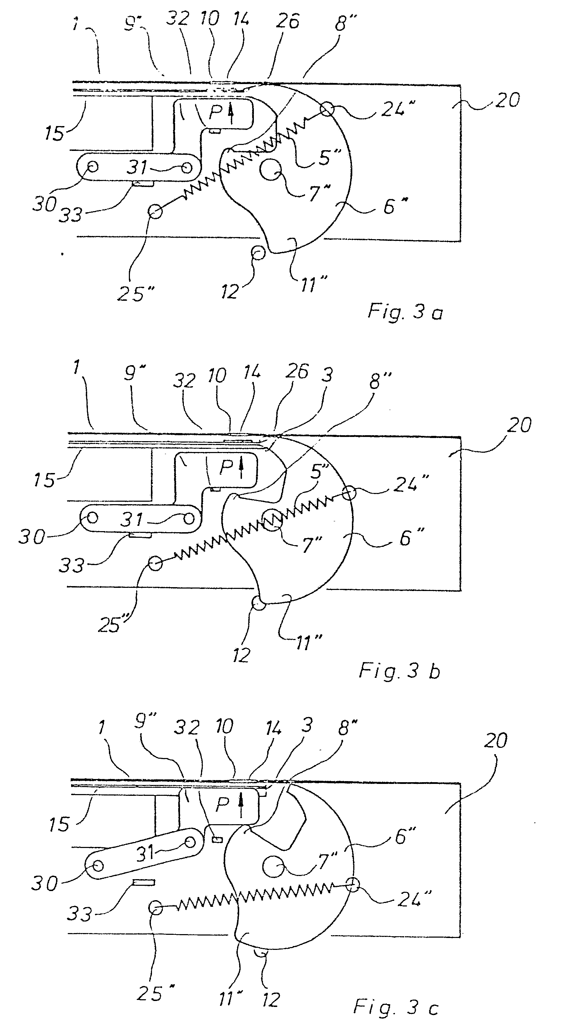

Die in den Fig. 3a bis 3c dargestellte bevorzugte Ausführungsform der Erfindung unterscheidet sich von der in der Fig. 1 dargestellten Ausführungsform insbesondere dadurch, daß die Andruckeinrichtung als doppelgelenkig aufgehängte Andruckplatte 9'' statt als seitliche geführter Kolben 9 ausgeführt ist.

Im übrigen bezeichnen die gleichen Bezugszeichen, die mit der Ausführungsform nach Fig. 1 übereinstimmenden Teile. Bauteile, die gegenüber der Ausführungsform in Fig. 1 abgewandelt oder anders angeordnet sind, sind zusätzlich mit zwei hochgestellten Strichen bezeichnet. Es sind dies insbesondere die Nockenscheibe 6'', die Achse 7'', die Andruckplatte 9'', der zusätzliche Nocken 11'', die in diesem Fall als Zugfeder 5'' ausgestaltete Federung mit der nockenscheibenseitigen gelenkigen Verbindung 24'' und dem Schwenklager 25'' und der Nocken 8'', der als gelenkige Verbindung zwischen der Nockenscheibe 6'' und der Andruckplatte 9'' wirkt.

Wie aus den Figuren zu ersehen ist, ist die Andruckplatte 9'' über zwei Gelenke 30 und 31 doppelgelenkig aufgehängt, so daß sie sich an die Rückseite des Teststreifens parallel anlegt und infolgedessen eine genau senkrechte Kraftwirkung der Andruckplatte auf den Teststreifen 1 gewährleistet ist, der seinerseits an dem Fenster 10 anliegt. Zur Halterung der Andruckplatte 9'' in der Ruhestellung sind zwei Lager 32 und 33 vorgesehen, die am Gehäuse 20 in geeigneter Weise befestigt sind.

Fig. 3a zeigt die Ruhestellung der Andruckeinrichtung, wobei der Teststreifen 1 gerade so weit in die Aufnahmeöffnung des Gerätes eingeführt ist, daß er an der Kontaktfläche 26 der Nockenscheibe 6'' anliegt. In Fig. 3b befindet sich die Nockenscheibe 6'' gerade im Scheitelpunkt ihrer Schwenkbewegung. Die Feder 5'' ist maximal gespannt. Die Achse der gelenkigen Verbindung 24'', die Hebelachse 7'' und die Achse des Schwenklagers 25'' liegen in einer Ebene. In diesem Moment befindet sich der Teststreifen 1 in einer Position kurz vor dem in der Figur weitgehend verdeckten Anschlag 3. Wird er weiter in Einführrichtung bewegt, so schlägt er schließlich in der in Fig. 3c dargestellten Weise an dem Anschlag 3 an. Die Nockenscheibe ist durch die Kraft der Feder 5'' in die Andruckposition bewegt, die in Fig. 3c dargestellt und in der der Teststreifen zuverlässig und exakt positioniert ist.

**Patentansprüche**

1. Vorrichtung zum Positionieren und Festhalten eines Teststreifens (1) für optisch medizinische Messungen, mit einem Gehäuse (20) mit einer Aufnahmeöffnung (2), die an ihrem inneren Ende einen Anschlag (3) für den Teststreifen (1) aufweist und einem Fenster (10), welches gegenüber dem Testfeld (14) eines in die Aufnahmeöffnung (2) eingeführten und am Anschlag (3) anliegenden Teststreifens angeordnet ist, mit einer im wesentlichen senkrecht auf die Rückseite (15) des Teststreifens (1) wirkenden Andruckeinrichtung (9, 9', 9''), dadurch gekennzeichnet, daß die Andruckeinrichtung (9, 9', 9'') sich beim Einführen des Teststreifens (1) in einer vom Teststreifen (1) entfernten Ruhelage befindet und in eine Andrückposition bewegbar ist, wenn der Teststreifen (1) sich in einer Position befindet, in der er am Anschlag (3) anliegt, wobei die Andruckeinrichtung (9, 9', 9'') den Teststreifen (1) gegen das Fenster (10) drückt und ihre Andruckkraft in den verschiedenen Teststreifendicken entsprechenden Positionen näherungsweise gleich ist.

2. Vorrichtung nach Anspruch 1, dadurch gekennzeichnet, daß die Bewegung der Andruckeinrichtung (9, 9', 9'') aus der Ruhelage in die Andrückposition durch eine im Bereich des Anschlages (3) angeordnete Betätigungseinrichtung ausgelöst wird.

3. Vorrichtung nach einem der Ansprüche 1 oder 2, dadurch gekennzeichnet, daß die Andruckeinrichtung (9, 9', 9'') in kraftschlüssiger Verbindung mit einer Federeinrichtung (5, 5', 5'') steht, wobei das Übersetzungsverhältnis der Kraftübertragung und die Kraft der Federeinrichtung sich in dem verschiedenen Teststreifendicken entsprechenden Bewegungsbereich näherungsweise reziprok ändern.

4. Vorrichtung nach einem der Ansprüche 1 bis 3, dadurch gekennzeichnet, daß der Bewegungsbereich der Andruckeinrichtung (9, 9', 9'') einen ersten Bereich einschließt, in dem eine Kraft in Richtung auf den Teststreifen (1) wirkt und einen zweiten Bereich, in dem eine Kraft vom Teststreifen (1) weg wirkt und daß die Andruckeinrichtung an dem beide Bereiche trennenden Scheitelpunkt von dem dicksten zu messenden Teststreifen noch einen Abstand hat.

5. Vorrichtung nach einem der Ansprüche 3 oder 4, dadurch gekennzeichnet, daß die Kraftübertragung zwischen der Federeinrichtung (5, 5', 5'') und der Andruckeinrichtung (9, 9', 9'') eine um eine Hebelachse (7, 7', 7'') schwenkbare Hebeleinrichtung (6, A-B, 6'') einschließt, welche eine erste gelenkige Verbindung (8, 8', 8'') zur Anlenkung der Andruckeinrichtung (9, 9', 9'') und eine zweite gelenkige Verbindung (24, 24', 24'') zur Anlenkung der Federeinrichtung (5, 5', 5'') aufweist.

6. Vorrichtung nach Anspruch 5, dadurch gekennzeichnet, daß die Federeinrichtung als Zug- oder Druckfeder (5, 5', 5'') ausgebildet ist, das von der Hebeleinrichtung (6, A-B, 6'') abgewandte Ende der Feder in einem Schwenklager (25, 25', 25'') angelenkt ist, die Feder unter Vorspannung steht und die Anordnung der gelenkigen Verbindungen (24, 24', 24'', 8, 8', 8'') an der Hebeleinrichtung, die Federvorspannung und die Federkonstante so dimensioniert sind, daß die Hebelkraftübertragung einerseits und die Federkraft andererseits sich in dem den verschiedenen Dicken zu messenden Teststreifen (1) entsprechenden Schwenkbereich der Hebeleinrichtung (6, A-B, 6'') näherungsweise reziprok ändern.

7. Vorrichtung nach einem der Ansprüche 5 oder 6, dadurch gekennzeichnet, daß der betriebsmäßige Schwenkbereich der Hebeleinrichtung (6, A-B, 6'') einen Scheitelpunkt einschließt, in welchem die Achse der zweiten gelenkigen Verbindung (24, 24', 24''), die Hebelachse (7, 7', 7'') und die Achse des Schwenklagers (25, 25', 25'') der Federeinrichtung, die im wesentlichen parallel zueinander verlaufen, in einer Ebene liegen und in welchem die Federeinrichtung (5, 5', 5'') maximal gespannt ist.

8. Vorrichtung nach einem der Ansprüche 5 bis 7, dadurch gekennzeichnet, daß die Hebeleinrichtung (6, A-B, 6'') als Betätigungseinrichtung eine Kontaktfläche (26) für den Teststreifen (1) aufweist, durch die sie durch den Teststreifen verschwenkbar ist und daß die Hebeleinrichtung (6, A-B, 6'') so dimensioniert ist, daß bei Anliegen des Teststreifens (1) an dem Anschlag (3) die Hebeleinrichtung (6, AB, 6'') über den Scheitelpunkt des Schwenkbereiches verschwenkt ist.

9. Vorrichtung nach einem der Ansprüche 5 bis 8, dadurch gekennzeichnet, daß die Andruckeinrichtung als doppelgelenkig aufgehängte Andruckplatte (9'') und die Hebeleinrichtung als Nockenscheibe (6'') ausgeführt ist, wobei die gelenkige Verbindung zwischen der Andruckplatte (9'') und der Nockenscheibe (6'') durch einen mit der Rückseite der Andruckplatte (9'') zusammenwirkende Nocken (8'') der Nockenscheibe (6'') gebildet wird.

10. Vorrichtung nach einem der Ansprüche 5 bis 8, dadurch gekennzeichnet, daß die Andruckeinrichtung als seitlich geführter Kolben (9) und die Hebeleinrichtung als Nockenscheibe (6) ausgeführt ist, wobei der Kolben im Betrieb von einem Nocken (8) der Nockenscheibe (6) betätigbar ist.

7

11. Vorrichtung nach einem der Ansprüche 9 oder 10, dadurch gekennzeichnet, daß bei Verwendung der Vorrichtung in einem Meßgerät ein Schalter (12) für die Energieversorgung des Meßgerätes durch einen Nocken (11, 11'') der Nockenscheibe (6, 6'') schaltbar ist.

12. Vorrichtung nach einem der Ansprüche 5 bis 10, dadurch gekennzeichnet, daß das Gehäuse (20) zum Herausnehmen des Teststreifens (1) in Längsrichtung beweglich ist und die Hebeleinrichtung (6) mit einem ortsfesten Betätigungsteil (16, 17) derart zusammenwirkt, daß beim Bewegen des Gehäuses (20) entgegen der Einschubeinrichtung des Teststreifens die Hebeleinrichtung so verschwenkt wird, daß der Teststreifen frei wird.

**Claims**

1. Device for positioning and firmly holding a test strip (1) for optical-medical measurements, with a housing (20) with a reception opening (2) which, on its inner end, has a stop (3) for the test strip (1) and a window (10) which is positioned opposite the test zone (14) of a test strip inserted into the reception opening (2) and lying against the stop (3), with a pressing mechanism (9, 9', 9'') acting substantially at right-angles on the rear side (15) of the test strip (1), characterised in that the pressing mechanism (9, 9', 9''), when inserting the test strip (1), is present in a resting position remote from the test strip (1) and is moveable into a pressing position when the test strip (1) is in a position in which it lies against the stop (3), whereby the pressing mechanism (9, 9', 9'') presses the test strip (1) against the window (10) and its pressing force is substantially equal in positions corresponding to various test strip thicknesses.

2. Device according to claim 1, characterised in that the movement of the pressing mechanism (9, 9', 9'') from the resting position into the pressing position is initiated by an operating device arranged in the region of the stop (3).

3. Device according to one of claims 1 or 2, characterised in that the pressing mechanism (9, 9', 9'') is in positive connection with a spring mechanism (5, 5', 5''), whereby the transmission relationship of the force transmission and the forces of the spring mechanism changes substantially reciprocally in the movement range corresponding to different test strip thicknesses.

4. Device according to one of claims 1 to 3, characterised in that the range of movement of the pressing mechanism (9, 9', 9'') includes a first range, in which a force acts in the direction of the test strip (1), and a second range, in which a force acts away from the test strip (1) and that the pressing mechanism, at the apex separating the two ranges, is still at a distance from the thickest test strip to be measured.

5. Device according to one of claims 3 or 4, characterised in that the force transmission between the spring mechanism (5, 5', 5'') and the pressing mechanism (9, 9', 9'') includes a lever mechanism (6, A-B, 6'') tiltable about a lever axis (7, 7', 7''), which lever mechanism has a first articulated joint (8, 8', 8'') for the articulation of the pressing mechanism (9, 9', 9'') and a second articulated joint (24, 24', 24'') for the articulation of the spring mechanism (5, 5', 5'').

6. Device according to claim 5, characterised in that the spring mechanism is constructed as a tension or pressure spring (5, 5', 5'') which is articulated from the end of the spring remote from the lever mechanism (6, A-B, 6'') in a tilting mount (25, 25', 25''), the spring is prestressed and the arrangement of the articulated joints (24, 24', 24'', 8, 8', 8'') on the lever mechanism, the spring prestressing and the spring constants are so dimensioned that the lever force transmission, on the one hand, and the spring force, on the other hand, change substantially reciprocally in the tilting range of the lever mechanism (6, A-B, 6'') corresponding to the various thicknesses of the test strips (1) to be measured.

7. Device according to one of claims 5 or 6, characterised in that the operational tilting range of the lever mechanism (6, A-B, 6'') includes an apex in which the axis of the second articulated joint (24, 24', 24''), the lever axis (7, 7', 7'') and the axis of the tilting mount (25, 25', 25'') of the spring mechanism, which run substantially parallel to one another, lie in one plane and in which the spring mechanism (5, 5', 5'') is tensioned to a maximum.

8. Device according to one of claims 5 to 7, characterised in that the lever mechanism (6, A-B, 6'') has, as operating device, a contact surface (26) for the test strip (1) by means of which it is tiltable by the test strip and that the lever mechanism (6, A-B, 6'') is so dimensioned that, when a test strip (1) is lying against the stop (3), the lever mechanism (6, A-B, 6'') is tilted over the apex of the tilting range.

9. Device according to one of claims 5 to 8, characterised in that the pressing mechanism is constructed as a doubly articulated, suspended pressing plate (9'') and the lever mechanism as a cam plate (6''), whereby the articulated joint between the pressing plate (9'') and the cam plate (6'') is formed by a cam (8'') of the cam plate (6'') cooperating with the rear side of the pressing plate (9'').

10. Device according to one of claims 5 to 8, characterised in that the pressing mechanism is constructed as a laterally guided piston (9) and the lever mechanism as a cam plate (6), whereby the piston is operable by a cam (8) of the cam plate (6).

11. Device according to one of claims 9 or 10, characterised in that, in the case of the use of the device in a measuring apparatus, a switch (12) is operable for the provision of energy for the measuring device by a cam (11, 11'') of the cam plate (6, 6'').

12. Device according to one of claims 5 to 10, characterised in that the housing (20) is, for the removal of the test strip (1), movable in a longitudinal direction and the lever mechanism (6) cooperates with a positionally fixed operating part (16, 17) in such a manner that, in the case of movement of the housing (20) counter to the insertion direction of the test strip, the lever mechanism is so tilted that the test strip is freed.

## Revendications

1. Dispositif pour la mise en place et le maintien d'un ruban-test (1) pour la réalisation de mesures médicales par voie optique, comprenant un boitier (20) muni d'un orifice récepteur (2), présentant à son extrémité intérieure une butée (3) pour le ruban-test (1) et une fenêtre (10), disposée face à la zone de test (14) d'un ruban-test introduit dans l'orifice récepteur (2) et reposant sur la butée (3), comprenant également un dispositif de pression (9, 9', 9'') agissant essentiellement verticalement sur le côté postérieur du ruban-test (1), caractérisé en ce que le dispositif de pression (9, 9', 9'') se trouve au moment de l'introduction du ruban-test (1) dans une position de repos éloignée du ruban-test (1) et peut être mû dans une position de pression lorsque le ruban-test (1) se trouve dans une position dans laquelle il repose sur la butée (3), le dispositif de pression (9, 9', 9'') pressant alors le ruban-test (1) contre la fenêtre (10), sa force de pression étant approximativement identique dans les positions correspondant aux différentes épaisseurs des rubans-test.

2. Dispositif selon la revendication 1, caractérisé en ce que le mouvement du dispositif de pression (9, 9', 9'') à partir de la position de repos vers la position de pression est provoqué par un dispositif d'actionnement disposé à proximité de la butée (3).

3. Dispositif selon l'une des revendications 1 et 2, caractérisé en ce que le dispositif de pression (9, 9', 9'') reçoit une force de commande provenant d'un dispositif à ressort (5, 5', 5''), réalisé de telle sorte que le rapport de transmission des forces et la force du dispositif à ressort varient approximativement de façon inverse dans le domaine de mobilité correspondant à différentes épaisseurs de ruban-test.

4. Dispositif selon l'une des revendications 1 à 3, caractérisé en ce que le domaine de mobilité du dispositif de pression (9, 9', 9'') comprend un premier domaine dans lequel agit une force dirigée vers le ruban-test (1) et un second domaine dans lequel agit une force s'éloignant du ruban-test (1) et en ce qu'au point de transition séparant ces deux domaines le dispositif de pression se trouve encore à une certaine distance du ruban-test à mesurer le plus épais.

5. Dispositif selon l'une des revendications 3 et 4, caractérisé en ce que la transmission des forces entre le dispositif à ressort (5, 5', 5'') et le dispositif de pression (9, 9', 9''), comprend un dispositif à levier (6, A-B, 6'') pouvant tourner autour d'un axe de levier (7, 7', 7''), présentant une première liaison articulée (8, 8', 8') pour la commande du dispositif de pression (9, 9', 9'') et une deuxième liaison articulée (24, 24', 24'') pour la commande du dispositif à ressort (5, 5', 5'').

6. Dispositif selon la revendication 5, caractérisé en ce que le dispositif à ressort est réalisé sous la forme d'un ressort de traction ou à pression (5, 5', 5''), l'extrémité du ressort éloignée du dispositif à levier (6, A-B, 6'') est reliée à un point de fixation orientable (25, 25', 25''), le ressort est soumis à une tension initiale et la disposition des liaisons articulées (24, 24', 24'', 8, 8', 8'') sur le dispositif à levier, la tension initiale et la constante du ressort sont dimensionnées de telle façon que la transmission des forces par le levier d'une part et la force du ressort d'autre part varient approximativement de façon inverse dans le domaine d'évolution du dispositif à levier (6, A-B, 6'') correspondant aux différentes épaisseurs du ruban-test à mesurer.

7. Dispositif selon l'une des revendications 5 et 6, caractérisé en ce que le domaine dans lequel le dispositif à levier (6, A-B, 6'') évolue pendant son fonctionnement comprend un point de transition où l'axe de la seconde liaison articulée (24, 24', 24''), l'axe du levier (7, 7', 7'') et l'axe du point de fixation orientable (25, 25', 25'') du dispositif à ressort, qui sont essentiellement parallèles l'un par rapport aux autres, sont situés dans un même plan et où la tension du dispositif à ressort (5, 5', 5'') est à son maximum.

8. Dispositif selon l'une des revendications 5 à 7, caractérisé en ce que le dispositif à levier (6, A-B, 6'') possède en tant que dispositif d'actionnement une aire de contact (26) pour le ruban-test (1), grâce à laquelle il peut être tourné par le ruban-test (1), et en ce que le dispositif à levier est dimensionné de telle manière que lorsque le ruban-test (1) repose contre la butée (3), le dispositif à levier (6, A-B, 6'') soit tourné au delà du point de transition du domaine d'évolution.

9. Dispositif selon l'une des revendications 5 à 8, caractérisé en ce que le dispositif de pression est réalisé sous la forme d'une plaque de pression (9'') à suspension doublement articulée et le dispositif à levier est réalisé sous la forme d'un disque à cames (6''), la liaison articulée entre la plaque de pression (9'') et le disque à cames (6'') étant formée par une came (8'') du disque à cames (6'), coopérant avec le côté arrière de la plaque de pression (9'').

10. Dispositif selon l'une des revendications 5 à 8, caractérisé en ce que le dispositif de pression est réalisé sous la forme d'une piston (9) à déplacement latéral, et le dispositif à levier est réalisé sous la forme d'un disque à cames (6), le piston pouvant être actionné

11. Dispositif selon l'une des revendications 9 ou 10, caractérisé en ce qu'au cours de l'utilisation du

9

dispositif dans un appareil de mesure, un commutateur (12) pour l'alimentation en énergie de l'appareil de mesur peut être actionné par une came (11, 11″) du disque à cames (6, 6″).

12. Dispositif selon l'une des revendications 5 à 10, caractérisé en ce que pour retirer le ruban-test (1), le boîtier (20) peut être déplacé en direction longitudinale et le dispositif à levier (6) coopère avec un élément d'actionnement statique (16, 17) de telle façon, qu'au cours du déplacement du boîtier (20) en sens contraire au sens d'introduction du ruban-test, le dispositif à levier soit tourné de telle manière que le ruban-test soit libéré.

Fig. 1

Fig. 3 a

Fig. 3 b

Fig. 3 c